# EUROPEAN PATENT APPLICATION

(11) **EP 3 079 050 A2**
(43) Date of publication of application: **12.10.2016**
(21) Application number: 16162341.8
(22) Date of filing: 24.03.2016
(51) Int. Cl.: G06F 3/0485, G06F 3/0489, G06F 1/16

(54) **DISPLAY APPARATUS AND CONTROL METHOD THEREOF**

(30) Priority: 07.04.2015 KR 20150049279
(71) Applicant: Samsung Electronics Co., Ltd., Gyeonggi-do 16677 (KR)
(72) Inventor: KWON, Oh-yun, 08801 Seoul, (KR); CHOI, Kyoung-oh, 07045 Seoul (KR); WU, qiuying, Tianjin, (CN)
(74) Representative: Appleyard Lees IP LLP

(57) **Abstract**

A display apparatus and a control method thereof are provided. The display apparatus includes a display configured to display content, and a processor configured to divide a screen of the display into a first area and a second area, control the display to display, in the first area, a first portion of the content, and control the display to display, in the second area, a second portion of the content, the second portion continuing in substance from the first portion. The processor is further configured to control the display to change the first portion and the second portion based on an input with respect to the first area or the second area.

## Description

### BACKGROUND

### 1. Field

Apparatuses and methods consistent with the exemplary embodiments relate to a display apparatus and a control method thereof, and more particularly, to a display apparatus and a control method thereof that divides a display screen into a plurality of areas and displays an image in the divided areas.

### 2. Description of the Related Art

In recent years, a display apparatus such as a television or a monitor that displays an image therein tends to employ a high-definition, large and wide display panel.

Such a display apparatus may display data as well as multimedia contents through various functions such as web browsing, e-book reader, document editor, algorithm coding tool, Windows Search, etc. For example, a display apparatus displays a web page by executing an application for web browsing.

If a wide-screen display apparatus that operates in a landscape mode displays data such as a web page that is shown in a vertical direction, data at the bottom are not displayed in a screen of the display apparatus. Then, a user may feel inconvenient to scroll the screen several times to view desired information.

In addition, because the quantity of data that is displayed at a time in a screen is limited and it is difficult to view data at the top and bottom at the same time, the scope of a user's thinking may become narrow, and the improvement of productivity may not be ensured.

### SUMMARY

Exemplary embodiments may address at least the above problems and/or disadvantages and other disadvantages not described above. Also, the exemplary embodiments are not required to overcome the disadvantages described above, and may not overcome any of the problems described above.

According to an aspect of an exemplary embodiment, there is provided a display apparatus including a display configured to display content, and a processor configured to divide a screen of the display into a first area and a second area, control the display to display, in the first area, a first portion of the content, and control the display to display, in the second area, a second portion of the content, the second portion continuing in substance from the first portion. The processor is further configured to control the display to change the first portion and the second portion based on an input with respect the first area or the second area. Accordingly, a screen of a limited size may display data that is two times that displayed previously and may provide a user with more information in one screen seamlessly.

The processor may be further configured to, based on the input being a first scroll input in a direction with respect to the first area, control the display to scroll content of the second area in a direction opposite to the direction of the first scroll input, and based on the input being a second scroll input in a direction with respect to the second area, control the display to scroll content of the first area in a direction opposite to the direction of the second scroll input. If a user scrolls one of the areas, the other one of the areas is also scrolled and thus continuity of data may be maintained.

The display apparatus may further include an interface configured to receive another input for execution of an easy scroll mode, and the processor may be further configured to divide the screen of the display into the first area and the second area based on the other input. Convenience is provided for a user to select whether to divide the screen.

The interface may include at least one among a hot key disposed on at least one among a main body of the display apparatus, an input apparatus external from the main body, and a host apparatus configured to connect to the main body, and an on screen display that is displayed by the display. Since a user may execute an easy scroll mode through a very simple manipulation, a user's convenience is improved.

The processor may be further configured to detect the display being changed from a portrait mode to a landscape mode, and divide the screen of the display into the first area and the second area in response to the processor detecting the display being changed from the portrait mode to the landscape mode. Therefore, the easy scroll mode may be executed automatically even without user input.

The processor may be further configured to arrange the first area and the second area in a horizontal direction in response to the processor detecting the display being changed from the portrait mode to the landscape mode. Thus, a user's eyes may feel comfortable even using the display apparatus for long time.

The display apparatus may further include a storage configured to store resolution information of a landscape mode and a portrait mode of the display, and an interface configured to receive another input for execution of an easy scroll mode. The processor may be further configured to detect the display being changed from the portrait mode to the landscape mode or vice versa, read, from the storage, the corresponding resolution information of the landscape mode or the portrait mode based on the other input or in response to the processor detecting the display being changed from the portrait mode to the landscape mode or vice versa, and divide the screen of the display into the first area and the second area based on the read corresponding resolution information. Hence, the screen may be divided even through a simple process of re-reading stored information.

The resolution information may include extended display identification data (EDID), and the processor may be further configured to switch a hot plug detect signal that is applied to a high definition multimedia interface connector based on the other input or in response to the processor detecting the display being changed from the portrait mode to the landscape mode or vice versa. Then, an effect of temporarily disconnecting the image source and then reconnecting the image source is given, and necessary information may be automatically read.

The processor may be further configured to rotate the content by 90 degrees based on the read corresponding resolution information, and control the display to display the rotated content in the first area and the second area of the display. Thus, by a simple method of using an image corresponding to existing resolution information, contents may be divided and displayed continuously.

The display apparatus may further include a storage configured to store resolution information of a landscape mode and a portrait mode of the display, and an interface configured to receive another input for execution of an easy scroll mode. The processor may be further configured to detect the display being changed from the portrait mode to the landscape mode or vice versa, read, from the storage, the resolution information of the landscape mode and the portrait mode, and divide the screen of the display into the first area and the second area based on the read resolution information, based on the other input or in response to the processor detecting the display being changed from the portrait mode to the landscape mode or vice versa.. As downloading of new EDID is omitted, a flickering of the screen that may take place while reading information is prevented.

The display apparatus may further include a storage configured to store resolution information of a landscape mode and a portrait mode of the display, and an interface configured to receive another input for execution of an easy scroll mode. The processor may be further configured to detect the display being changed from the portrait mode to the landscape mode or vice versa, read, from the storage, the resolution information of one among the landscape mode and the portrait mode, determine a resolution of another one among the landscape mode and portrait mode based on the read resolution information, and divide the screen of the display into the first area and the second area based on the determined resolution, based on the other input or in response to the processor detecting the display being changed from the portrait mode to the landscape mode or vice versa. A flickering of the screen that may take place while reading information is prevented, and a user's visual discomfort may be reduced.

According to an aspect of another exemplary embodiment, there is provided a display apparatus including a communicator configured to receive an image signal, a display configured to display an image based on the image signal, and a processor configured to divide a screen of the display into a first area and a second area, control the display to display, in the first area, a first portion of the image, and control the display to display, in the second area, a second portion of the image, the second portion continuing in substance from the first portion. The processor is further configured to control the display to change the first portion and the second portion based on an input with respect to the first area or the second area. By dividing the received data and displaying such divided data, data may be displayed two times more than that displayed previously, in a continued form in a screen of a limited size.

The processor may be further configured to, based on the input being a first scroll input in a direction with respect to the first area, control the display to scroll an image of the second area in a direction opposite to the direction of the first scroll input, and based on the input being a second scroll input in a direction with respect to the second area, control the display to scroll an image of the first area in a direction opposite to the direction of the second scroll input. Therefore, if a user scrolls one of the areas, the other one of the areas is also scrolled and thus continuity of data may be maintained.

According to an aspect of another exemplary embodiment, there is provided a control method of a display apparatus, the control method including dividing a screen of a display into a first area and a second area, displaying, in the first area, a first portion of content, and displaying, in the second area, a second portion of the content, the second portion continuing in substance from the first portion. The control method further includes changing the first portion and the second portion based on an input with respect to the first area or the second area. Accordingly, a screen of a limited size may display data two times more and provide a user with more information in one screen seamlessly.

The changing may include based on the input being a first scroll input in a direction with respect to the first area, scrolling content of the second area in a direction opposite to the direction of the first scroll input, and based on the input being a second scroll input in a direction with respect to the second area, scrolling content of the first area in a direction opposite to the direction of the second scroll input. If a user scrolls one of the areas, the other one of the areas is also scrolled and thus continuity of data may be maintained.

The control method may further include receiving another input for execution of an easy scroll mode, and the dividing may include the screen of the display into the first area and the second area based on the other input. Convenience is provided for a user to select whether to divide the screen through simple manipulation.

The control method may further include detecting the display being changed from a portrait mode to a landscape mode, and the dividing may include dividing the screen of the display into the first area and the second area in response to the detecting the display being changed from the portrait mode to the landscape mode. Therefore, the easy scroll mode may be executed automatically even without user input.

The control method may further include receiving another input for execution of an easy scroll mode, or detecting the display being changed from a portrait mode to a landscape mode or vice versa, and reading, from a storage, corresponding resolution information of the landscape mode or the portrait mode based on the other input or in response to the detecting the display being changed from the portrait mode to the landscape mode or vice versa. The dividing may include dividing the screen of the display into the first area and the second area based on the read corresponding resolution information. Hence, the screen may be divided even through a simple process of re-reading stored information.

The resolution information may include extended display identification data (EDID), and the control method may further include switching a hot plug detect signal that is applied to a high definition multimedia interface connector based on the other input or in response to the detecting the display being changed from the portrait mode to the landscape mode or vice versa. Then, an effect of temporarily disconnecting the image source and then reconnecting the image source is given, and necessary information may be automatically read.

The control method may further include rotating the content by 90 degrees based on the read corresponding resolution information, and displaying the rotated content in the first area and the second area of the display. Thus, by a simple method of using an image corresponding to existing resolution information, contents may be divided and displayed continuously.

The control method may further include receiving another input for execution of an easy scroll mode, or detecting the display being changed from a portrait mode to a landscape mode or vice versa, and reading, from a storage, resolution information of the landscape mode and the portrait mode. The dividing may include dividing the screen of the display into the first area and the second area based on the read resolution information, based on the other input or in response to the detecting the display being changed from the portrait mode to the landscape mode or vice versa. As downloading of new EDID is omitted, a flickering of the screen that may take place while reading information is prevented.

The control method may further include receiving another input for execution of an easy scroll mode, or detecting the display being changed from a portrait mode to a landscape mode or vice versa, reading, from a storage, resolution information of one among the landscape mode and the portrait mode, and determining a resolution of another one among the landscape mode and portrait mode based on the read resolution information. The dividing may include dividing the screen of the display into the first area and the second area based on the determined resolution, based on the other input or in response to the detecting the display being changed from the portrait mode to the landscape mode or vice versa. A flickering of the screen that may take place while reading information is prevented, and a user's visual discomfort may be reduced.

According to an aspect of another exemplary embodiment, there is provided a control method of a display apparatus, the control method including receiving an image signal, displaying an image based on the image signal, dividing a screen of a display into a first area and a second area, displaying, in the first area, a first portion of the image, and displaying, in the second area, a second portion of the image, the second portion continuing in substance from the first portion. The control method further includes changing the first portion and the second portion based on an input with respect to the first area or the second area. By dividing the received data and displaying such divided data, data may be displayed two times more than that displayed previously, in a continued form in a screen of a limited size.

The changing may include based on the input being a first scroll input in a direction with respect to the first area, scrolling an image of the second area in a direction opposite to the direction of the first scroll input, and based on the input being a second scroll input in a direction with respect to the second area, scrolling an image of the first area in a direction opposite to the direction of the second scroll input. Therefore, if a user scrolls one of the areas, the other one of the areas is also scrolled and thus continuity of data may be maintained.

According to an aspect of another exemplary embodiment, there is provided a display apparatus including a display configured to display content, and a processor configured to divide a screen of the display into a first area and a second area, control the display to display, in the first area, a first portion of the content, and control the display to display, in the second area, a second portion of the content, the second portion being sequentially connected to the first portion. The processor is further configured to control the display to change the first portion and the second portion to a third portion of the content and a fourth portion of the content, respectively, based on an input with respect to the first area or the second area.

The processor may be further configured to, based on the input being a scroll input in a direction with respect to the first area or the second area, control the display to scroll the first portion and the second portion to the third portion and the fourth portion, respectively, in a direction opposite to the direction of the scroll input.

The processor may be further configured to, based on the input being a screen extension input with respect to the first area or the second area, control the display to change the first portion and the second portion to the third portion and the fourth portion, respectively, the third portion and the fourth portion being zoomed-in with respect to the first portion and the second portion, respectively.

### BRIEF DESCRIPTION OF THE DRAWINGS

The above and/or other aspects will be more apparent by describing exemplary embodiments with reference to the accompanying drawings, in which:
FIG. 1 is a block diagram illustrating a display apparatus according to an exemplary embodiment;
FIG. 2 is a detailed block diagram illustrating the display apparatus in FIG. 1 that receives an image signal through a communicator;
FIGS. 3, 4, and 5 are views illustrating a display apparatus that divides a screen and displays images in the divided screen, according to an exemplary embodiment;
FIG. 6 is a perspective view illustrating a hot key that is provided on a main body of a display apparatus and corresponds to an easy scroll mode, according to an exemplary embodiment;
FIG. 7 is a view illustrating a screen of a display apparatus that is used to select and set an easy scroll mode using an OSD menu, according to an exemplary embodiment;
FIGS. 8, 9, and 10 are views illustrating a change in a screen that is made according to a user input to a display apparatus, according to an exemplary embodiment;
FIGS. 11 and 12 are views illustrating a screen of a display apparatus that is divided into three areas, according to an exemplary embodiment; and
FIG. 13 is a flowchart illustrating a control method of a display apparatus, according to an exemplary embodiment.

### DETAILED DESCRIPTION

Exemplary embodiments are described in greater detail below with reference to the accompanying drawings.

In the following description, like drawing reference numerals are used for like elements, even in different drawings. The matters defined in the description, such as detailed construction and elements, are provided to assist in a comprehensive understanding of the exemplary embodiments. However, it is apparent that the exemplary embodiments can be practiced without those specifically defined matters. Also, well-known functions or constructions may not be described in detail because they would obscure the description with unnecessary detail.

It will be understood that the terms "comprises" and/or "comprising" used herein specify the presence of stated features or components, but do not preclude the presence or addition of one or more other features or components. In addition, the terms such as "unit," "-er (-or)," and "module" described in the specification refer to an element for performing at least one function or operation, and may be implemented in hardware, software, or the combination of hardware and software.

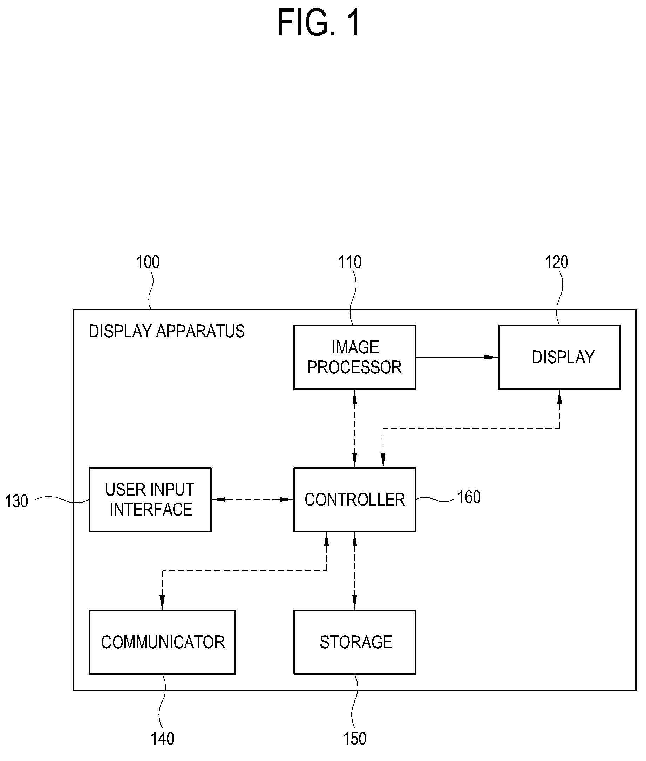

FIG. 1 is a block diagram illustrating a display apparatus 100 according to an exemplary embodiment.

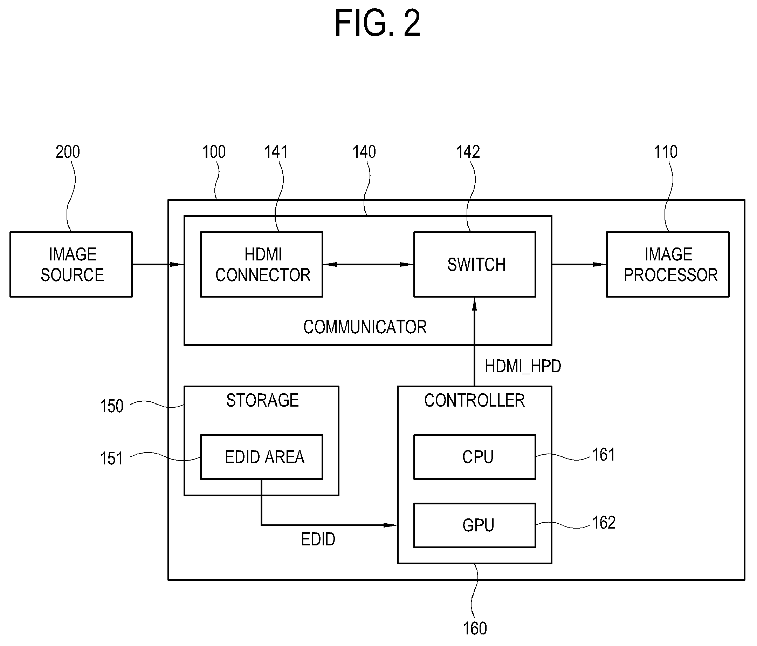

As shown therein, the display apparatus 100 according to an exemplary embodiment processes an images signal (input signal) supplied by an external image source 200 (see FIG. 2) according to a preset process, and displays the processed signal into an image in a display 120.

In an exemplary embodiment, the display apparatus 100 may be achieved by a monitor to receive an image signal from a main body of a personal computer (PC) or by a television to display a broadcast image based on broadcast signals/broadcast information/broadcast data transmitted by a transmission device of a broadcasting station. However, the kind of images to be displayable on the display apparatus 100 is not limited to the broadcast image. For example, the display apparatus 100 may display a moving image, a still image, an application, an on-screen display (OSD), a user interface (UI or also referred to as a 'graphic user interface (GUI)') for controlling various operations, etc. based on a signal/data received from various types of image sources.

According to an exemplary embodiment, the display apparatus 100 may be achieved by a smart TV or internet protocol (IP) TV. The smart TV is capable of receiving and displaying a broadcast signal in real time, which has a web-browsing function to search and consume various contents through Internet while displaying the broadcast signal in real time and thus provides a convenient user environment. Further, the smart TV has an open software platform to provide an interactive service to a user. Therefore, the smart TV can provide a user with various contents, for instance, applications corresponding to predetermined services, through the open software platform. Such an application refers to an application program for providing various services, for example, social network service (SNS), finance, news, weather, maps, music, movie, game, electronic book, etc.

That is, the exemplary embodiments to be described hereinafter are just examples variously applicable in accordance with the types of devices and systems, and do not limit the present inventive concept.

Hereinafter, a detailed configuration of the display apparatus 100 will be described.

As shown in FIG. 1, the display apparatus 100 includes an image processor 110 to process an image signal; the display 120 to display an image therein based on an image signal processed by the image processor 110; a user input interface 130 to receive an input from a user; a communicator 140 to communicate with the exterior; a storage 150 to store data therein; and a controller 160 to control the display apparatus 100.

The image processor 110 performs various image processing processes previously set with respect to an image signal. The image processor 110 outputs the processed image signal to the display 120, thereby displaying an image on the display 120.

There is no limit to the kind of image processing processes performed by the image processor 110. For example, the image processing processes may include decoding corresponding to various image formats, de-interlacing, frame refresh rate conversion, scaling, noise reduction for improving image quality, detail enhancement, line scanning, etc. The image processor 110 may be achieved by an individual group for independently performing each of the processes, or may be achieved by a system-on-chip (SoC) in which various functions corresponding to such processes are integrated. For example, the display apparatus 100 may have an image processor 110 therein that is achieved by an image processing board including various chipsets and memories to perform the foregoing image processing processes.

The "image processing" used in this specification means processing an input image signal by the image processor 110 or the controller 160, i.e., by a processor for its purpose, and includes both analog signal processing and digital signal processing. Hereinafter, the image processing means digital image processing with respect to an image for convenience, but not limited thereto and may be widely interpreted.

The image processing in this specification may include at least one among point processing, area processing, geometric processing and frame processing. The point processing is a method for processing a pixel based on a location of the pixel. The area processing may change a pixel value based on the original value of the pixel and that of a neighboring pixel. The geometric processing may change locations or arrangements of pixels. The frame processing may change pixel values based on calculation of two or more images. Unless otherwise provided herein, the image processing means the point processing with respect to an image.

The image processor 110 may include an image receiver to receive an image signal from an image source. The image receiver may be variously achieved in accordance with formats of the received image signal and the types of the display apparatus 100. For example, the image receiver may receive a radio frequency (RF) signal from a broadcasting station wirelessly, or may receive an image signal of composite video, component video, super video, SCART, high definition multimedia interface (HDMI) standards by a wire. The image receiver may include a tuner to be tuned to a channel corresponding to a broadcast signal if the image signal is the broadcast signal.

Further, the image signal may be received from an external apparatus. For example, the image signal may be output from a personal computer (PC), an audio/video (AV) system, a smart phone, a smart pad, or the like external apparatus. In addition, the image signal may be based on data received through Internet or the like network. In this case, the display apparatus 100 may perform network communication through the communicator 140, or may further include a separate network communicator. Besides, the image signal may be based on data stored in the storage 150 that is nonvolatile like a flash memory, a hard disk drive, etc. The storage 150 may be provided inside or outside the display apparatus 100. If the storage 150 is placed outside the display apparatus 100, a connector may be additionally provided to connect with the storage 150.

The display 120 displays an image therein based on an image signal processed by the image processor 110.

The method of achieving the display 120 is not limited, and may be variously achieved by, e.g., liquid crystal, plasma, light-emitting diode, organic light-emitting diode, surface-conduction electro-emitter, carbon nano-tube and nano crystal.

The display 120 may include additional elements in accordance with its types.

As an example, the display apparatus 100 in an exemplary embodiment includes a panel for displaying an image therein, and a light source (hereinafter, to be also referred to as a backlight) for supplying light to the panel. The light source may include an LED. The display 120 may further include a driver for driving the panel and the light source.

In an exemplary embodiment, the display panel is achieved by a high-definition, large and wide screen, e.g., with an aspect ratio of 21:9 or 16:9.

The light source includes one among an edgy type that is arranged in at least one among edges in the display panel, and a direct type that is arranged in a rear surface of the display panel. The driver as an example of a light source driving apparatus may be achieved by an independent printed circuit board (PCB) in which at least one circuit element is provided. In another exemplary embodiment, the light source and the driver may be achieved by one device. The driver may control a current supplied to the light source to cause the light source to emit light in a desired quantity.

In an exemplary embodiment, the display 120 is achieved by an LED, and includes a panel, a light source including an LED backlight, and a driver achieved by an LED driver. However, the present inventive concept is not limited to the foregoing, and for example, the light source may be otherwise achieved by an LCD backlight.

The present inventive concept is also applicable to the case in which the display panel includes a light emitting cell including an OLED. If the display panel is achieved by an OLED, the driver may control a current supplied to each of the light emitting cells in the display panel to cause the light emitting cells to emit light in a desired quantity.

The display 120 in an exemplary embodiment may display a user interface (UI) or an OSD including a menu item of the display apparatus 100. A user may operate an input apparatus such as a remote controller, a keyboard or a mouse or a key pad in a main body of the display apparatus 100, and input his/her selection while viewing Uls displayed on the display 120.

In an exemplary embodiment, a screen of the display 120 may be divided into a plurality of areas, which may display contents that are continued in substance. In response to a user input with respect to one among the plurality of areas in the screen, images may be changed and displayed in all of the plurality of areas. Displaying and changing contents will be described in more detail in subsequent exemplary embodiments.

The user input interface 130 transmits various preset control commands or unlimited information to the controller 160 by a user's manipulation and/or input.

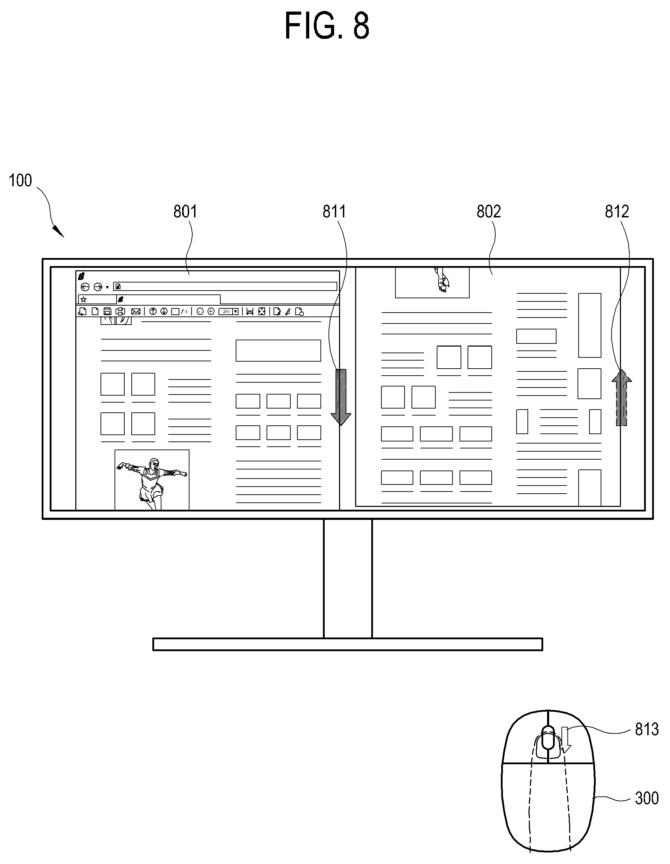

The user input interface 130 in an exemplary embodiment includes a keypad (or input panel) including buttons such as s number key, menu key and function key provided in the main body of the display apparatus 100, and may further include an input apparatus 300 (see FIG. 8) such as a mouse, keyboard or remote controller, which is separated from the main body of the display apparatus 100, generates a command/data/information/signal previously set for remotely controlling a TV or monitor, and transmits the generated command/data/information/signal to the display apparatus 100. The remote controller may include a touch sensor to receive a user's touch input and/or a motion sensor to sense its own motion caused by a user.

The input apparatus 300 is an external apparatus that is capable of communicating with the main body of the display apparatus 100 in a wired or wireless manner. The wireless communication includes Bluetooth, infrared communication, RF communication, wireless LAN, Wi-Fi Direct, etc. If the input apparatus 300 is a keyboard or a mouse, it may be connected to the display apparatus 100 in a wired or wireless manner.

The input apparatus 200 transmits a preset command to the display apparatus 100 when it is operated by a user.

The keypad includes a physical keypad that is formed in a front surface, lateral surface and/or rear surface of the display apparatus 100; a virtual keypad that is displayed as a UI in the display 120; and a physical keypad, e.g., a keyboard that can be connected to the display apparatus 100 in a wireless or wired manner. The physical keypad that is formed in the front surface, lateral surface and/or rear surface of the display apparatus 100 may include a touch button that is operated by a user's touch.

Further, a person of ordinary skill in the art would note without difficulty that the foregoing physical keypad or buttons that form the keypad may be added or removed depending on the performance or structure of the display apparatus 100.

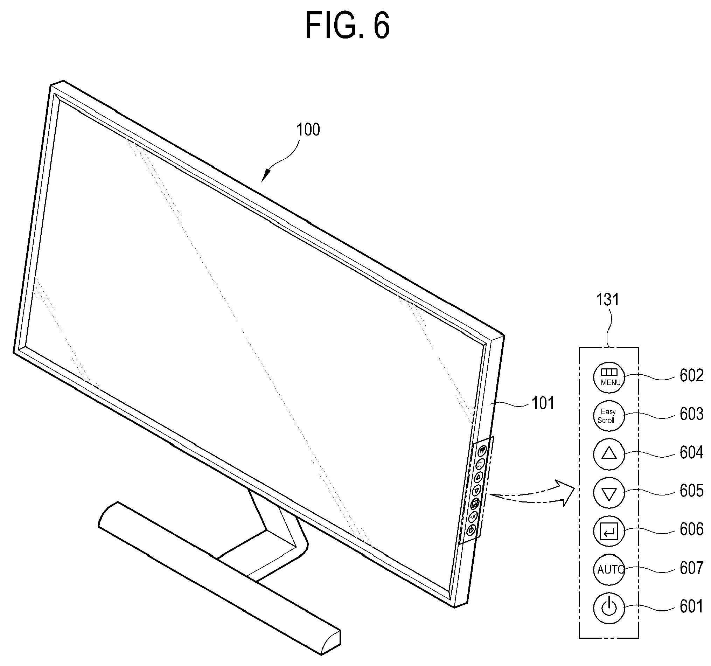

In an exemplary embodiment, the user input interface 130 is provided in at least one among the main body of the display apparatus 100, the input apparatus 300 that is separated from the main body and a host apparatus that may be connected to the main body of the display apparatus 100. The user input interface 130 may include a hot key 603 (see FIG. 6) corresponding to an easy scroll mode. The host apparatus may include a PC connected to a monitor, if the display apparatus 100 is achieved by such monitor.

The communicator 140 includes a wired/wireless communication interface to communicate with various external apparatuses including the input apparatus 300.

The communicator 140 transmits a command/data/information/signal from an external apparatus to the controller 160. Further, the communicator 140 may transmit a command/data/information/signal from the controller 160 to an external apparatus.

The communicator 140 may perform a wireless communication for a communication between the display apparatus 100 and the input apparatus 300. The wireless communication includes Bluetooth, RF, Zigbee, infrared communication, etc.

The communicator 140 is mounted in the display apparatus 100 according to an exemplary embodiment, but may be otherwise achieved by a dongle or a module to be detachably coupled to a connector of the display apparatus 100.

The display apparatus 100 according to an exemplary embodiment may receive an image signal from an image source 200 (image source or a video source) through the communicator 140. The image source 200 includes a DVD player, computer, set-top box, etc., and the display apparatus 100 may operate by plug and play by which the display apparatus 100 may exchange information with the image source 200.

FIG. 2 is a detailed block diagram illustrating the display apparatus 100 in FIG. 1 that is achieved to receive an image signal through the communicator 140.

According to an exemplary embodiment, the display apparatus 100 may receive an image signal from the image source 200 through the communicator 140. FIG. 2 illustrates the case in which the image source 200 is a host apparatus, i.e., a PC, and the display apparatus 100 is a monitor.

If the communicator 140 connected to the image source 200 is connected to the display apparatus 100, various information stored in the display apparatus 100 is transmitted to the image source 200. The image source 200 may transmit an image signal to the display apparatus 100 that is consistent with user environment of the display apparatus 100, based on the received information.

As shown in FIG. 2, the communicator 140 that serves as an interface for exchanging image signals between the display apparatus 100 and the image source 200 includes a high definition multimedia interface (HDMI) connector 141, and a switch 142 for receiving an HPD signal (to be described later). The HDMI employs a digital image signal transmission protocol called transition minimized differential signaling (TMDS).

To achieve the HDMI, image signal converter called TMDS transmitter TX and TMDS receiver (RX) may be used. That is, the transmitter TX is mounted in the image source 200, and the receiver RX is mounted in the display apparatus 100 so that a digital image signal is transmitted by the image source 200 to the display apparatus 100.

With respect to the HDMI image signal transmission, if the transmitter TX applies a predetermined voltage (e.g., 5V) to the receiver RX and the receiver RX outputs a hot plug detect signal (hereinafter, to be also referred to as HPD signal), it may be determined that the display apparatus 100 is connected to the image source 200. For example, if the display apparatus 100 is connected to the image source 200, an HPD signal (HDMI_HPD) may be changed (switched) from a high to a low signal to be applied to the switch 142.

If the HPD signal is applied, the transmitter TX determines that the display apparatus 100 and the image source 200 are connected to each other normally, commences a display data channel (DDC) communication, receives data such as resolution of the display apparatus 100 in which the receiver RX is mounted, and transmits an image signal to the receiver RX through an TMDS line based on the received data.

The display apparatus 100 may include a plurality of connection terminals, i.e., connectors therein, which are connected to a plurality of image sources. Although FIG. 2 illustrates only one HDMI connector 141 for convenience, the present inventive concept is not limited to the foregoing and the communicator 140 may include a plurality of HDMI connectors. In addition, the communicator 140 may further include various interfaces such as digital video interface as well as the HDMI to transmit and receive image signals.

The controller 160 is connected to a plurality of connection terminals through an input/output port (general purpose input/output) (GPIO) and determines a connection of a jack of the image source 200 to each of the connection terminals. If the jack is connected to the connection terminal, the controller 160 outputs an HPD signal to cause an image signal to be transmitted from the image source 200 to the receiver RX.

The storage 150 stores data under control of the controller 160, and there is no limit to the kind of data. The storage 150 is achieved by a flash memory, a hard-disc drive and the like nonvolatile storage medium. The storage 150 is accessed by the controller 160, and thus the controller 160 performs reading/ recording/ modifying/ deleting/ updating/ etc. the data.

The data stored in the storage 150 includes an operating system (OS) for driving the display apparatus 100, and various applications that may be executed on the OS and image data and additional data.

The storage 150 according to an exemplary embodiment may store therein various information of the display apparatus 100. The information stored in the storage 150 includes resolution of the display apparatus 100, and the resolution information may include extended display identification data (EDID) that may be stored in an EDID area 151 of the storage 150 as shown in FIG. 2. The EDID area 151 may be achieved by an electrically erasable and programmable read only memory (EEPROM) corresponding to a predetermined connector, e.g., the HDMI connector 141. The EEPROM may have EDID therein that has been written during a manufacturing process.

The EDID area 151 stores therein resolution information with respect to a landscape mode and a portrait mode as screen modes of the display 120. For example, in the case of an FHD, EDID with respect to 1920x1080@60Hz (landscape) and 1080x1920@60Hz (portrait) resolution is stored as supporting resolution information of the display 120. The resolution information of the landscape mode and portrait mode may be stored in separation areas of the storage 150.

The image source 200 may receive an information package of resolution, horizontal frequency and vertical frequency as EDID from the display apparatus 100 and may provide an optimum image that may be displayed by the display apparatus 100.

In an exemplary embodiment, EDID may be resolution information of the display apparatus 100 and may be transmitted to the image source 200 through the HDMI connector 141. A protocol for transmitting EDID is a DDC transmission established by VESA.

The display apparatus 100 includes a plurality of ports to which a plurality of connectors is connected, and an EEPROM that stores therein EDID corresponding to the connectors connected to the ports may be provided for each port. Although FIG. 2 illustrates only one EDID area 151 for convenience, the present inventive concept is not limited to the foregoing and the storage 150 may include a plurality of EDID areas therein.

If the connectors are connected to each of the plurality of ports and a signal requesting for EDID is transmitted through the connectors, EDID may be loaded from the EEPROM provided for each port, to the image source 200 through the connectors.

The controller 160 performs control operations with regard to various elements of the display apparatus 100. The controller 160 controls overall operations of the display apparatus 100 and signal flow among internal elements 120 to 150 of the display apparatus 100 and performs data processing function. For example, the controller 160 proceeds with an image processing process of the image processor 110 and performs control operations corresponding to a user input that is made through the user input interface 130 including through the input apparatus 300, to thereby control whole operations of the display apparatus 100.

The controller 160 controls power supplied by a power supply to internal elements 120 to 150 of the display apparatus 100. In addition, upon a user input or a satisfaction of a preset and stored condition, the controller 160 may execute the OS and other applications stored in the storage 150.

The controller 160 may include at least one processor, a ROM as a non-volatile memory storing therein a control program to control the display apparatus 100, and a RAM as a volatile memory storing therein a signal or data that is input from the exterior or being used as a storage area for various operations performed by the display apparatus 100. The processor loads a program from a ROM into the RAM and executes the loaded program.

The controller 160 in an exemplary embodiment is achieved by at least one universal processor such as a central processing unit (CPU), an application processor (AP), a microcomputer (MICOM) or the like, and for example runs a program loaded into the RAM by a predetermined algorithm stored in the ROM, thereby performing various operations of the display apparatus 100. FIG. 2 illustrates an example of the controller 160 that is achieved by a CPU 161.

If the controller 160 of the display apparatus 100 is achieved by a single processor, e.g., by the CPU 161, the CPU 161 may be provided to implement various functions implementable in the display apparatus 100, for example, control for various image processing processes, such as decoding, demodulating, scaling, etc.; response to a user command received through the user input interface 130 including the input apparatus 300; and control for wired/wireless network communication with the external apparatus including the image source 200 through the communicator 140.

That is, the CPU 161 may detect a connection with the image source 200 through the HDMI connector 141 by plug and play, and control the HDMI connector 141 to transmit resolution information of the display apparatus 100 to the image source 200.

The processor may include single, dual, triple, quad and other multiple cores. The processor may include a plurality of processors, e.g., a main processor and a sub processor that operates in a sleep mode (in which mode, only stand-by power is supplied and the display apparatus does not operate). The processor, ROM and RAM may be connected with one another through an internal bus.

If the display apparatus 100 is achieved by a monitor according to an exemplary embodiment, the controller 160 may further include a graphic processing unit (GPU) 162 to process graphics.

If the display apparatus 100 is achieved by one among a digital TV, smart phone and smart pad according to another exemplary embodiment, the processor may include a GPU, and the processor may be achieved by, e.g., a SoC into which a core and GPU are incorporated.

According to another exemplary embodiment, the controller 160 may include a program for performing a function supported by the display apparatus 100, e.g., for performing the function in response to an execution of an easy scroll mode, and a chip provided as an exclusive processor for executing the foregoing program, e.g., an integrated circuit (IC) chip.

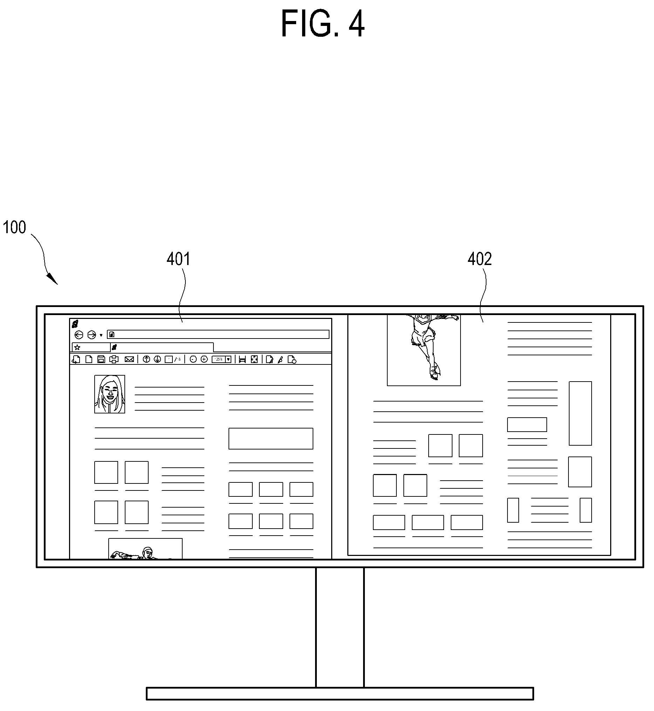

The controller 160 according to an exemplary embodiment controls the display 120 to divide a screen of the display 120 into a plurality of areas, e.g., into a first area 401 and a second area 402 (see FIG. 4), and to display in the second area 402 a content, which is continued in substance from a content displayed in the first area 401.

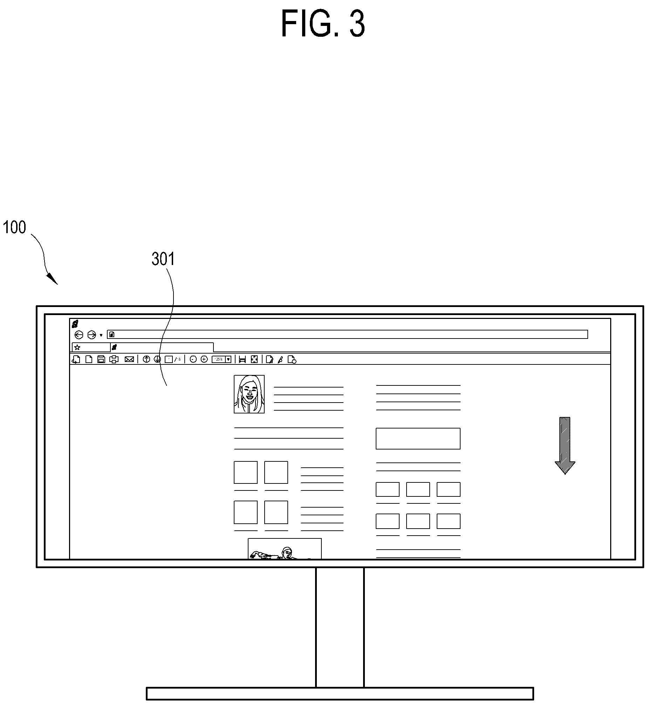

FIGS. 3, 4, and 5 are views illustrating the display apparatus 100 that divides a screen and displays images in the divided screen, according to an exemplary embodiment.

As shown in FIG. 3, the display apparatus 100 in an exemplary embodiment may be achieved by a monitor with a wide screen of 21:9 to display various contents such as a web page in the display 120. In a web page, data are displayed in a vertical direction (or a lengthwise direction) (the "data displaying direction").

In an exemplary embodiment below, a web page is described as an example of a content provided in a vertical direction, but the present inventive concept is not limited thereto, and e-books, documents, coding data in a predetermined programming language, files and folders in Window Search and other data that can be provided in a vertical direction may be included in the contents in the present inventive concept.

If the display apparatus 100 operates in a landscape mode, a screen of the display 120 includes a single area 301 in which a horizontal direction is longer.

If the display 120 displays a content such as a web page in which the data display direction is a vertical direction, a blank area is formed in the left and right of the screen and no data exist in such blank area, and therefore the screen area is not efficiently used. In addition, a user may perform manipulations such as scrolling down the screen several times through the input apparatus 300 such as a mouse or a keyboard to see data in a bottom of the web page.

As shown in FIG. 4, the controller 160 in an exemplary embodiment divides the screen of the display 120 into a plurality of areas, e.g., into the first area 401 and the second area 402. To minimize a user's visual discontinuity, the second area 402 displays a content that is continued in substance from the content displayed in the first area 401.

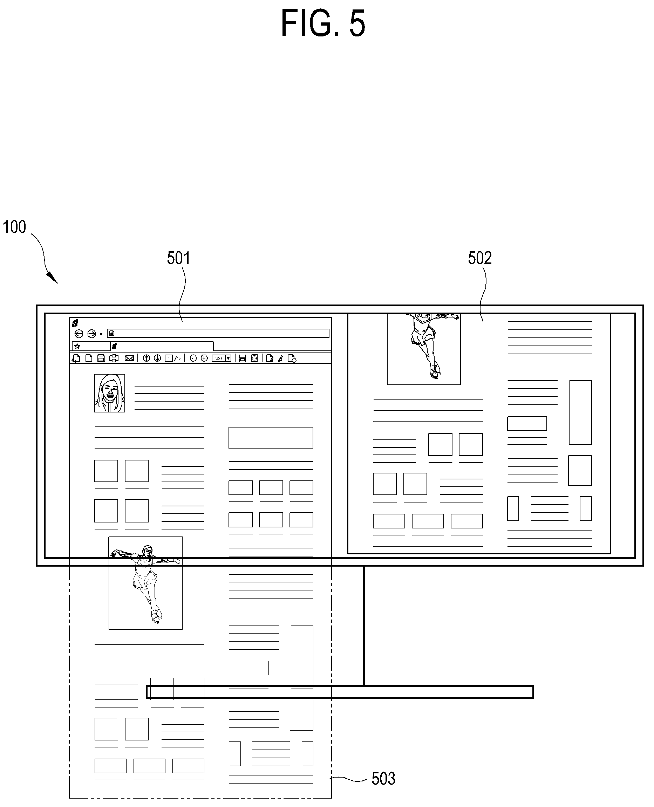

That is, a joint portion of a bottom of the first area 401 continues to a joint portion of a top of the second area 40, and as a result, a second area 502 displays a content that was in a virtual bottom area 503 of a first area 501 as shown in FIG. 5.

Accordingly, if the first area 401 and the second area 402 are sequentially connected in the data displaying direction (vertical direction) in FIG. 4, the entire data screen may be formed without discontinuity.

For the foregoing purpose, the controller 160 controls the display 120 to divide and display in the first and second areas 401 and 402 a content corresponding to an image signal supplied by the image source 200.

As the display 120 in FIG. 4 displays more content than the display 120 in FIG. 3 does, a user's scroll input may be minimized.

Because a screen mode of the display apparatus 100 is a landscape mode, the first and second areas 401 and 402 are arranged in a horizontal direction.

In response to an execution of an easy scroll mode through the user input interface 130, the controller 160 may control to divide the screen of the display 120.

FIG. 6 is a perspective view illustrating a hot key 607 that is provided on a main body of the display apparatus 100 and corresponds to an easy scroll mode, according to an exemplary embodiment.

As shown in FIG. 6, the display apparatus 100 according to an exemplary embodiment includes a keypad 131 as the user input interface 130 that is provided on a lateral main body 101. The keypad in the lateral main body 101 includes a power button 601, a menu button 602, direction keys 604 and 605, an enter button 606 (or push button) and an automatic adjustment button 607, and in an exemplary embodiment, further includes the hot key 603 corresponding to the easy scroll mode.

A user may push the hot key 603 to select and execute an easy scroll function in the display apparatus 100.

In an exemplary embodiment in FIG. 6, the keypad 131 including the hot key 603 is provided on the lateral main body 101 of the display apparatus 100, but not limited thereto. Alternatively, the keypad 131 may be provided in other various positions such as a front or rear surface of the display apparatus 100.

FIG. 6 illustrates an example of the hot key 603 as an additional button corresponding to the easy scroll mode, but the present inventive concept is not limited thereto. Alternatively, only an existing keypad may be provided to perform a function as a hot key corresponding to the easy scroll mode. For example, the following cases may also be included in the present inventive concept: the easy scroll mode is set to be executed if a user pushes the enter button 606 or another button two times consecutively or pushes such buttons for a long period of time.

In the display apparatus 100 in an exemplary embodiment, the keypad 131 is installed on one among front, lateral and rear surfaces of the display apparatus 100, and the position of the keypad 131 is not limited to that in FIG. 6 (right bottom).

The hot key corresponding to the easy scroll mode may be provided in the input apparatus 300, e.g., a remote controller, a keyboard, a mouse or a host apparatus (computer) that is separated from the display apparatus 100. If the input apparatus 300 is a remote controller, the input apparatus 300 may further include a touch sensor to receive a user's touch input.

A user may push the hot key of the input apparatus 300 to thereby execute the easy scroll mode of the display apparatus 100. The concerned command is transmitted to the main body of the display apparatus 100 through an internal communication interface (e.g., infrared communication, Bluetooth communication, etc.).

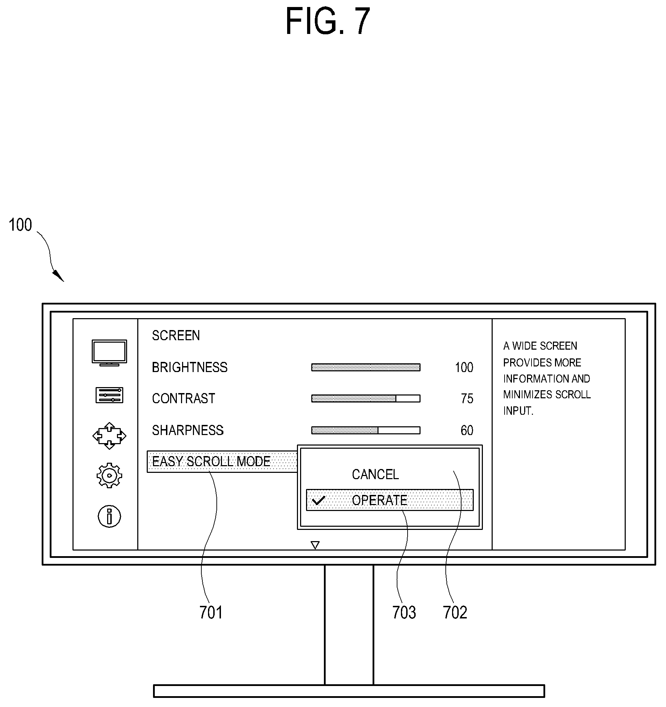

In an exemplary embodiment, no hot key may be provided on the display apparatus 100 corresponding to the easy scroll mode. In such case, a user may select an item 701 (see FIG. 7) from an OSD menu displayed in the display 120 to execute the easy scroll mode.

FIG. 7 is a view illustrating a screen of the display apparatus 100 that is used to select and set the easy scroll mode using an OSD menu, according to an exemplary embodiment.

For example, while an easy scroll mode setup screen is displayed as shown in FIG. 7, a user may manipulate keypad buttons in the main body of the display apparatus 100 or the input apparatus 300 to select and execute the easy scroll mode.

If a user selects the menu item 701 of the easy scroll mode from the easy scroll mode setup screen displayed in the display 120, a cancel item 702 and an operate item 703 are displayed with respect to the concerned mode for a user to select the items. If a user selects the operate item 703, the display 120 displays the selected item 703 by highlight or other effects. The highlighting effect may include animation effect such as flickering.

According to an exemplary embodiment, if the easy scroll mode is selected for operation as in FIG. 6 or 7, the controller 160 of the display apparatus 100 divides the screen of the display 120 into a plurality of areas, e.g., into the first area 401 and the second area 402 and controls the display 120 to display contents in the second area 402 that is continued in substance from the content in the first area 401.

The present inventive concept includes the case in which the controller 160 detects a change in the screen mode of the display 120, and in response to such change divides the screen of the display 120 into the plurality of areas 401 and 402.

For example, if the display apparatus 100 is a portable device such as a smart phone or a smart pad (tablet), while a web application displaying a web page is being executed, a screen mode may be changed from a portrait mode to a landscape mode by a user's manipulation (e.g., change of posture). The controller 160 may detect the change of the screen mode through a posture sensor (e.g., gyro sensor) provided in the display apparatus 100.

The controller 160 may detect the change of posture through the sensor, and according to the result of the detection may determine that the screen mode has been changed from the portrait mode to the landscape mode. The controller 160 then divides the screen of the display 120 into the plurality of areas 401 and 402 and controls the display 120 to display contents that are continued in substance in the divided areas 401 and 402.

The controller 160 of the display apparatus 100 according to an exemplary embodiment switches a hot plug detect signal HDMI_HPD applied to the HDMI connector 141 and re-reads resolution information from the storage 150 in response to the execution of the easy scroll mode or to the change of the screen mode of the display 120.

For example, if a user selects the hot key 603 or the relevant menu 703 in the OSD to enable the easy scroll mode, the CPU 161 switches an HPD signal HDMI_HPD applied to the switch 142 to a high state and then back to a low state. Then, the connection with the image source 200 through the HDMI connector 141 is temporarily disconnected and then connected again so that the display apparatus 100 re-authenticates the image source 200.

The controller 160 reads resolution information from a separate area of the storage 150, i.e., from the EDID area 151 corresponding to the portrait mode of the display 120. That is, the controller 160 may detect resolution information from the storage 150 corresponding to the portrait mode and may renew the resolution information to apply the detected resolution to the display 120.

In the easy scroll mode, the portrait mode may be defined as an EDID prime mode with priority to renew corresponding resolution information for an EDID prime portion. Then, the GPU 162 performs graphic processing with respect to an image corresponding to the read resolution information of the portrait mode.

In this case, the display apparatus 100 operates as if in the portrait mode although the display 120 is actually in the landscape mode.

The controller 160 controls the image processor 110 and the display 120 to rotate image data output by the GPU 162 by 90 degrees and to display such rotated image data in the first and second areas 401 and 402, respectively. That is, an image signal that has been received through the HDMI connector 141 is changed in resolution and rotated by 90 degrees to be displayed in a vertical direction in the first and second areas 401 and 402 and may be transmitted to the display 120 through a scaler.

The controller 160 may detect data information per panel line of the display 120 and control the display 120 to display contents continued in substance in the first and second areas 401 and 402.

Accordingly in the easy scroll mode, although the display 120 is in the landscape mode as in FIG. 4, contents are simultaneously displayed in a picture-by-picture mode in which the screen is divided into left and right screen areas 401 and 402. The first area 401 as the left divisional screen displays a top divisional portion of the content that has been rotated by 90 degrees, and the second area 402 as the right divisional screen displays a bottom divisional content that has been rotated by 90 degrees.

Then a user may view more information of a web page at a time without visual discontinuity without additional scroll manipulation.

In an exemplary embodiment, at the time when the easy scroll mode is executed or the screen mode of the display 120 is changed, the controller 160 downloads, i.e., reads corresponding new resolution (e.g., resolution in a portrait mode) from the EDID area 151 using an HPD signal, and applies the resolution information to the display 120, but the present inventive concept is not limited to the foregoing.

In the display apparatus 100 according to another exemplary embodiment, resolution information of two screen modes, i.e., a landscape mode and a portrait mode, may be simultaneously downloaded, i.e., read, from the EDID area 151, and in response to a user input for executing the easy scroll mode or for changing the screen mode of the display 120, the screen of the display 120 may be divided to display contents in divided areas of the screen to apply the corresponding resolution information of the pre-downloaded resolution information to the display 120.

For example, if a power on command is transmitted to the display apparatus 100, which is in a power off state, the controller 160 of the display apparatus 100 according to another exemplary embodiment may read all EDID corresponding to the landscape mode and the portrait mode from the EDID area 151 of the storage 150, and may apply resolution of one among the two modes corresponding to the current screen mode (landscape mode) to the display 120. If a user input is made through the user input interface 130 to execute the easy scroll mode, the controller 160 applies the downloaded resolution to the display 120 corresponding to the EDID of the portrait mode, and controls the display 120 to divide the screen of the display 120 and to display contents in the divided screen. The controller 160 may display an image in each area of the display 120 by rotating the image by 90 degrees.

In another exemplary embodiment, downloading, i.e., reading new EDID at the time of the execution of the easy scroll mode or at the time of the change of the screen mode may be omitted, and therefore a flickering of the display 120 that may take place in the process of reading the information may be prevented to thereby reduce a user's visual discomfort.

In the display apparatus 100 according to another exemplary embodiment, resolution information of a screen mode may be downloaded, i.e., read from the EDID area 151, and based on the downloaded resolution information, resolution of another screen mode may be calculated. In response to a user input for executing the easy scroll mode or for changing the screen mode of the display 120, the screen of the display 120 may be divided and displayed to apply the calculated resolution information to the display 120.

For example, if a power on command is transmitted to the display apparatus 100, which is in a power off state, the controller 160 of the display apparatus 100 according to another exemplary embodiment may read EDID corresponding to the portrait mode as the current screen mode from the EDID area 151 of the storage 150, and may apply resolution of the relevant EDID (portrait mode) to the display 120. The controller 150 may then compute (or calculate) resolution suitable for the landscape mode based on the read resolution information of the portrait mode.

If a change of the screen mode from the portrait mode to the landscape mode is detected, the controller 160 applies resolution corresponding to the pre-computed EDID of the landscape mode to the display 120, and controls the display 120 to divide the screen of the display 120 and display contents in the divided screen.

In the another exemplary embodiments as above, reading new EDID at the time of the execution of the easy scroll mode or at the time of the change of the screen mode may be omitted, and therefore a flickering of the display 120 that may take place in the process of reading the information may be prevented.

While the screen of the display 120 has been divided into the plurality of areas 401 and 402 according to the execution of the easy scroll mode or the change of the screen mode, the display apparatus 100 in an exemplary embodiment may receive a user input with respect to one among the areas 401 and 402. The controller 160 controls the display 120 to change and display the first and second areas 401 and 402 in response to a user input with respect to one among the plurality of areas, i.e., the first and second areas 401 and 402.

FIGS. 8, 9, and 10 are views illustrating a change in a screen that is made according to a user input to the display apparatus 100, according to an exemplary embodiment.

As shown in FIG. 8, in response to a scroll input 811 in a predetermined direction with respect to one among a first area 801 and a second area 802, the controller 160 controls the display 120 to scroll a content of the area 802, which does not correspond to the scroll input, toward a direction opposite to the scroll input 811. The content of the area 801 that corresponds to the scroll input 811 is also changed and displayed corresponding to the scroll input 811.

For example, while the screen of the display 120 has been divided into the plurality of areas 801 and 802 as in FIG. 8, the scroll input 811 in a downward direction with respect an area, i.e., the first area 801, is received. The scroll input 811 in the downward direction corresponds to a scroll manipulation 813 in a downward direction using the input apparatus 300, i.e., a mouse.

In response to the scroll input 811 in the downward direction with respect to the first area 801, the controller 160 controls a screen of the second area 802 to be scrolled upwards 812.

All of the screen of the first and second areas 801 and 802 are scrolled upwards, and contents that are continued in substance are displayed in the areas 801 and 802. As a result, a joint portion of the bottom of the first area 801 is continued to a joint portion of the top of the second area 802 even in the changed screen.

In an exemplary embodiment, the foregoing phenomenon will be referred to as a seamless scroll or a seamless display.

In an exemplary embodiment, the controller 160 may detect data information per panel line of the display 120 and control the display 120 to display contents continued in substance in the first and second areas 801 and 802 in response to a user input.

In the display apparatus 100 in an exemplary embodiment, the seamless scroll/display applies to areas regardless of whether or not such areas receive a user input.

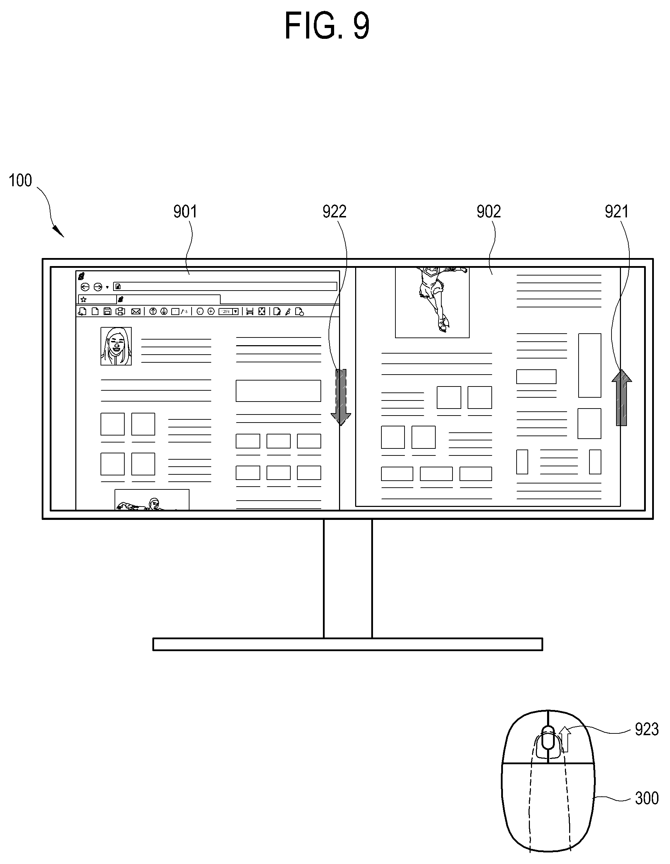

That is, as shown in FIG. 9, a scroll input 921 in an upward direction with respect to a second area 902 is made by a user. The scroll input 921 in the upward direction corresponds to a scroll manipulation 923 in an upward direction using the input apparatus 300, i.e., a mouse.

In response to the scroll input 921 in the upward direction with respect to the second area 802, the controller 160 controls the screen of a first area 901 to be scrolled downwards 922.

In FIGS. 8 and 9, the scroll inputs 813 and 923 are described as an example of a user input, and the user input according to the present inventive concept may further include at least one among a screen extension/reduction input, an area upsizing/downsizing input and a screen rotating input as well as scroll.

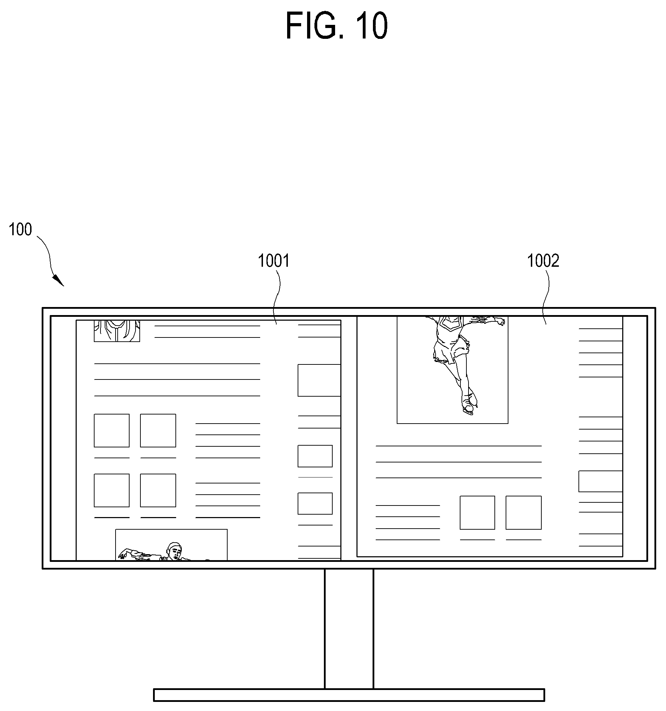

FIG. 10 illustrates first and second areas 1001 and 1002 that have been changed and displayed in response to a screen extension input.

While the screen of the display 120 has been divided into a plurality of areas 1001 and 1002, the controller 160 receives a screen extension input from a user regarding an area, e.g., the first area 1001. The controller 160 may receive a screen extension input by scrolling upwards using a mouse while pushing a control key in a keyboard.

In response to the screen extension input with respect to the first area 1001, the controller 160 controls the display 120 to change and display (e.g., zoom in on or increase a size of contents of) the screen of the first and second areas 1001 and 1002 as in FIG. 10. Because the seamless scroll/display also applies to the plurality of areas 1001 and 1002 in an exemplary embodiment in FIG. 10, the controller 160 may detect data information per panel line of the display 120 and control the display 120 to display contents continued in substance in the first and second areas 1001 and 1002.

The display apparatus 100 according to an exemplary embodiment may divide the screen of the display 120 into three or more areas.

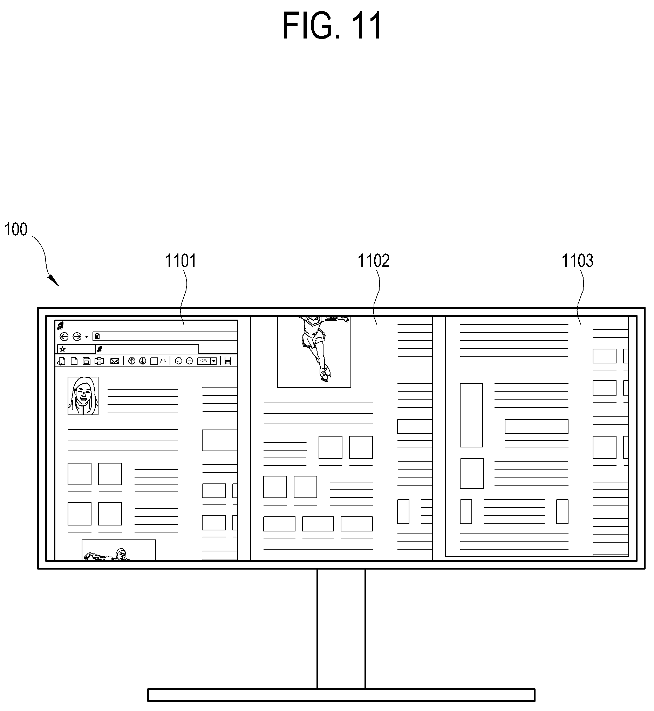

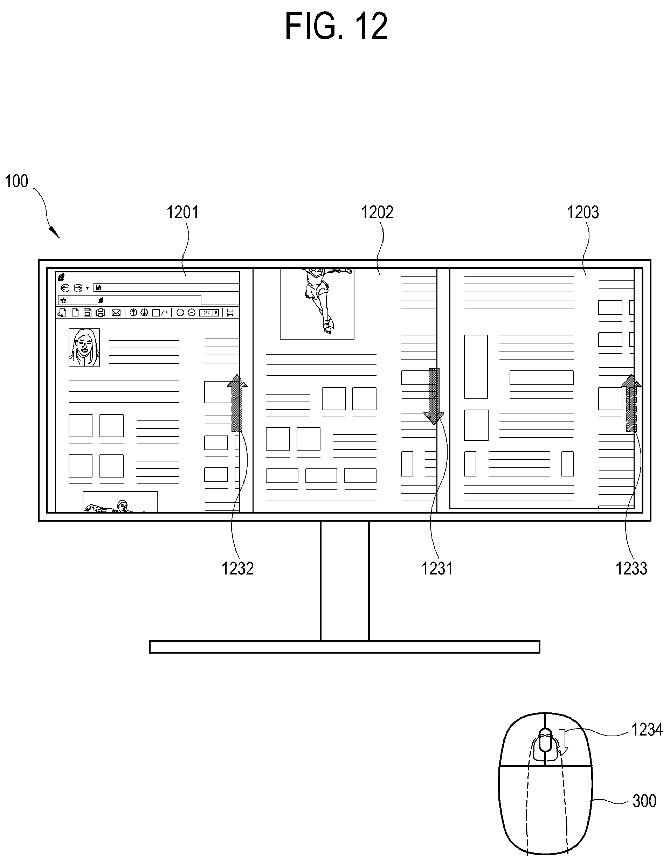

FIGS. 11 and 12 are views illustrating a screen of the display apparatus 100 that is divided into three areas, according to an exemplary embodiment.

As shown in FIG. 11, the display apparatus 100 divides the screen of the display 120 into a plurality of areas, i.e., into a first area 1101, a second area 1102 and a third area 1103 according to an execution of an easy scroll mode or a change of a screen mode. A user may designate the number of the divided screen through an OSD menu displayed in the display 120, and the controller 160 controls the display 120 to divide the screen into areas and display contents in the divided areas in response to the number of the divided screen as designated by a user.

The divided areas 1101, 1102 and 1103 display contents that are continued in substance, and for example, the content of the first area 1101 continues to the content of the second area 110, and the content of the second area 1102 continues to the content of the third area 1103. That is, a joint portion of a bottom of the first area 1101 is continued to a joint portion of a top of the second area 1102, and a joint portion of a bottom of the second area 1102 is continued to a joint portion of a top of the third area 1103.

If the screen of the display 120 is divided into three areas as in FIG. 11, it may display more data than the screen of the display 120 divided into two areas.

As shown in FIG. 12, while the screen of the display 120 is divided into first to third areas 1201, 1202 and 1203, the display apparatus 100 may receive a user input with respect one among the areas 1201, 1202 and 1203. In response to a user input with respect to one among the plurality of areas, i.e., first to third areas 1201, 1202 and 1203, for example with respect to the second area 1202, the controller 160 controls the display 120 to change and display the first and third areas 1201 and 1203 as well as the second area 1202.

That is, a scroll input 1231 in a downward direction with respect to the second area 1202 is made by a user as in FIG. 12, and the scroll input 1231 in the downward direction corresponds to a scroll manipulation 1234 in a downward direction using the input apparatus 300, i.e., a mouse.

In response to the scroll input 1231 in the downward direction with respect to the second area 1202, the controller 160 controls the display 120 to scroll upwards 1232 and 1233 the screens of the first and third areas 1201 and 1203.

Accordingly, the screen of all of the first to third areas 1201 to 1203 is scrolled upwards, and a seamless scroll/display may be achieved as contents that are continued in substance are displayed in all of the areas 1201, 1202 and 1203.

Below, a control method of the display apparatus 100 according to an exemplary embodiment will be described with reference to accompanying drawings.

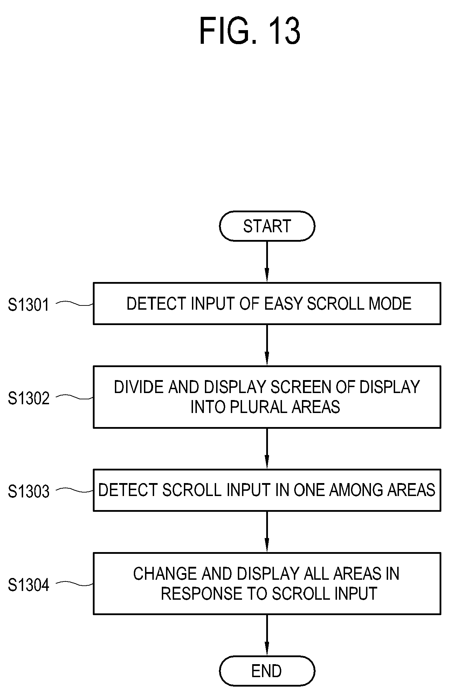

FIG. 13 is a flowchart illustrating a control method of the display apparatus 100, according to an exemplary embodiment.

In S1301, the display apparatus 100, which is achieved by a 12:9 wide monitor, detects a user input that is made through the user input interface 130 to execute the easy scroll mode. The easy scroll mode may be executed by a user's selection of the hot key 603 provided in one among the main body of the display apparatus 100, the input apparatus 300 and host apparatus (computer) that are separated from the display apparatus 100, and the user's selection of the OSD menu item 703 corresponding to the execution of the easy scroll mode.

If the easy scroll mode is executed according to the user's selection, in S1302, the controller 160, in response to the foregoing, divides the screen of the display 120 into the plurality of areas 401 and 402 and controls the display 120 to display contents that are continued in substance in the divided areas 401 and 402. In response to the execution of the easy scroll mode, the controller 160 may switch the HPD signal applied to the HDMI connector 141 and re-read the resolution information of the landscape mode of the display 120 from the EDID area 151. Then, based on the re-read resolution information of the landscape mode, the controller 160 controls the display 120 to divide the screen and display contents in the divided screen. The controller 160 may receive an image from the image source 200 in response to the re-read resolution information, and display the received image continued in substance in the plurality of areas 401 and 402 by rotating the received image by 90 degrees.

While the screen of the display 120 is divided into the plurality of areas 801 and 802 as in S1302, in S1303, the controller 160 detects the scroll input 811 in a predetermined direction that is made through the input apparatus 300 such as a mouse or a keyboard, as a user manipulation in one among the areas 801 and 802.

In S1304, the controller 160 controls the display 120 to change and display all areas, i.e., the plurality of areas 801 and 802, in response to the scroll input 811 made at S1303. That is, the area 802 in which the user input has not been detected is scrolled in the opposite direction (e.g., upwards 812) of the scroll input 811 (e.g., downwards) made at S1303, and accordingly, the first and second areas 801 and 802 display contents that are continued in substance.

According to the exemplary embodiments as above, there is an advantage of doubling the quantity of displayable information using the display apparatus 100 with the same resolution and in the same size. As data are displayed doubly in the display apparatus 100, a web page as a content that has information arranged in a vertical direction, a window of a software coding program, and information that was not displayed in a screen in a windows search may be displayed.

In addition, unnecessary scroll input is removed or reduced compared to user's scroll input that was used to view information that was not displayed in a screen, to thereby improve work efficiency. Because more data are displayed in one screen and top and bottom data can be viewed at the same time, the scope of thinking is widened, and creativity/productivity can be improved.

As human eyes have a wider visual field in the left and right side and the muscular motion in a horizontal direction is easier than in a vertical direction, the seamless scroll/display using the left and right divisional screens may make a user's eyes feel comfortable even when using the display apparatus 100 for long time.

In the case of a wide screen that is longer in a horizontal direction, left and right blank areas of such screen are used to display data, and thus resources can be used more efficiently without payment of additional expenses.

In addition, the exemplary embodiments may also be implemented through computer-readable code and/or instructions on a medium, e.g., a computer-readable medium, to control at least one processing element to implement any above-described exemplary embodiments. The medium may correspond to any medium or media that may serve as a storage and/or perform transmission of the computer-readable code.

The computer-readable code may be recorded and/or transferred on a medium in a variety of ways, and examples of the medium include recording media, such as magnetic storage media (e.g., ROM, floppy disks, hard disks, etc.) and optical recording media (e.g., compact disc read only memories (CD-ROMs) or digital versatile discs (DVDs)), and transmission media such as Internet transmission media. Thus, the medium may have a structure suitable for storing or carrying a signal or information, such as a device carrying a bitstream according to one or more exemplary embodiments. The medium may also be on a distributed network, so that the computer-readable code is stored and/or transferred on the medium and executed in a distributed fashion. Furthermore, the processing element may include a processor or a computer processor, and the processing element may be distributed and/or included in a single device.

A computer program is a code that may be read and executed by a CPU, and includes a code for executing operations of the controller 160 as in S1301 to S1304 in FIG. 13.

The computer program may be achieved by being included in software including OS or applications of the display apparatus 100 and/or software that serves as an interface with respect to an external apparatus.

The foregoing exemplary embodiments are examples and are not to be construed as limiting. The present teaching can be readily applied to other types of apparatuses. Also, the description of the exemplary embodiments is intended to be illustrative, and not to limit the scope of the claims, and many alternatives, modifications, and variations will be apparent to those skilled in the art.

## Claims

1. A display apparatus comprising:
a display configured to display content; and
a processor configured to:
divide a screen of the display into a first area and a second area;
control the display to display, in the first area, a first portion of the content;
control the display to display, in the second area, a second portion of the content, the second portion continuing in substance from the first portion; and
control the display to change the first portion and the second portion based on an input with respect the first area or the second area.

2. The display apparatus according to claim 1, wherein the processor is further configured to:
based on the input being a first scroll input in a direction with respect to the first area, control the display to scroll content of the second area in a direction opposite to the direction of the first scroll input; and
based on the input being a second scroll input in a direction with respect to the second area, control the display to scroll content of the first area in a direction opposite to the direction of the second scroll input.

3. The display apparatus according to claim 1, further comprising an interface configured to receive another input for execution of an easy scroll mode,
wherein the processor is further configured to divide the screen of the display into the first area and the second area based on the other input.

4. The display apparatus according to claim 3, wherein the interface comprises at least one among a hot key disposed on at least one among a main body of the display apparatus, an input apparatus external from the main body, and a host apparatus configured to connect to the main body, and an on screen display that is displayed by the display.

5. The display apparatus according to claim 1, wherein the processor is further configured to:
detect the display being changed from a portrait mode to a landscape mode; and
divide the screen of the display into the first area and the second area in response to the processor detecting the display being changed from the portrait mode to the landscape mode.

6. The display apparatus according to one of claims 1 to 5, further comprising:
a storage configured to store resolution information of a landscape mode and a portrait mode of the display; and
an interface configured to receive another input for execution of an easy scroll mode,
wherein the processor is further configured to:
detect the display being changed from the portrait mode to the landscape mode or vice versa;
read, from the storage, the corresponding resolution information of the landscape mode or the portrait mode based on the other input or in response to the processor detecting the display being changed from the portrait mode to the landscape mode or vice versa; and
divide the screen of the display into the first area and the second area based on the read corresponding resolution information.

7. The display apparatus according to claim 6, wherein the resolution information comprises extended display identification data (EDID), and
the processor is further configured to switch a hot plug detect signal that is applied to a high definition multimedia interface connector based on the other input or in response to the processor detecting the display being changed from the portrait mode to the landscape mode or vice versa.

8. The display apparatus according to claim 6, wherein the processor is further configured to:
rotate the content by 90 degrees based on the read corresponding resolution information; and
control the display to display the rotated content in the first area and the second area of the display.

9. The display apparatus according to one of claims 1 to 5, further comprising:
a storage configured to store resolution information of a landscape mode and a portrait mode of the display; and
an interface configured to receive another input for execution of an easy scroll mode,
wherein the processor is further configured to:
detect the display being changed from the portrait mode to the landscape mode or vice versa;
read, from the storage, the resolution information of the landscape mode and the portrait mode; and
divide the screen of the display into the first area and the second area based on the other input or in response to the processor detecting the display being changed from the portrait mode to the landscape mode or vice versa.

10. The display apparatus according to one of claims 1 to 5, further comprising:
a storage configured to store resolution information of a landscape mode and a portrait mode of the display, and
an interface configured to receive another input for execution of an easy scroll mode,
wherein the processor is further configured to:
detect the display being changed from the portrait mode to the landscape mode or vice versa;
read, the first area and the second area, the resolution information of one among the landscape mode and the portrait mode
determine a resolution of another one among the landscape mode and the portrait mode based on the read resolution information; and
divide the screen of the display into the first area and the second area based on the determined resolution, based on the other input or in response to the processor detecting the display being changed from the portrait mode to the landscape mode or vice versa.

11. A control method of a display apparatus, the control method comprising:
dividing, in the first area, a first portion of content;
displaying, in the second area, a second portion of the content, the second portion continuing in substance from the first portion; and
changing the first portion and the second portion based on an input with respect to the first area or second area.

12. The control method according to claim 11, wherein the changing comprises:
based on the input being a first scroll input in a direction with respect to the first area, scrolling content of the second area in a direction opposite to the direction of the first scroll input; and
based on the input being a second scroll input in a direction with respect to the second area, scrolling content of the first area in a direction opposite to the direction of the second scroll input.

13. The control method according to claim 11, further comprising receiving another input for execution of an easy scroll mode,
wherein the dividing comprises dividing the screen of the display into the first area and the second area based on the other input.

14. The control method according to one of claims 11 to 13, further comprising detecting the display being changed from a portrait mode to a landscape mode,
wherein the dividing comprises dividing the screen of the display into the first area and the second area in response to the detecting the display being changed from the portrait mode to the landscape mode.

15. The control method according to claim 14, wherein the resolution information comprises extended display identification data (EDID), and
the control method further comprises switching a hot plug detect signal that is applied to a high definition multimedia interface connector based on the other input or in response to the detecting the display being changed from the portrait mode to the landscape mode or vice versa.
